# EUROPÄISCHE PATENTSCHRIFT

(11) **EP 2 182 282 B1**
(45) Veröffentlichungstag und Bekanntmachung des Hinweises auf die Patenterteilung: **17.04.2019**
(21) Anmeldenummer: 09173295.8
(22) Anmeldetag: 16.10.2009
(51) Int. Cl.: F23K 5/00, F16L 55/11

(54) **Gassammelleitung sowie gasbetriebenes Gerät mit einer Gassammelleitung**
Gas collecting pipe and gas-operated device with a gas collecting pipe
Conduite de collecte de gaz et appareil fonctionnant au gaz doté d'une conduite de collecte de gaz

(30) Priorität: 31.10.2008 ES 200803168
(43) Veröffentlichungstag der Anmeldung: 05.05.2010
(73) Patentinhaber: BSH Hausgeräte GmbH, 81739 München (DE)
(72) Erfinder: Aguado Muñoz, Sergio, 48013, Bilbao (ES); Loibide Zubia, Angeles, 20560, Oñati (Guipuzcoa) (ES)

(56) Entgegenhaltungen:
- US-A1- 2002 000 716
- US-A1- 2005 026 101
- US-A1- 2008 251 064

## Beschreibung

Die vorliegende Erfindung betrifft eine Gassammelleitung gemäß dem Oberbegriff des Anspruchs 1 sowie ein gasbetriebenes Gerät mit einer solchen Gassammelleitung.

Es sind Gassammelleitungen bekannt, die über ein Rohrelement aus einem Metallwerkstoff, wie z.B. Stahl, verfügen, welches an seiner Außenseite mit einer Schutzschicht versehen ist. Das Rohrelement weist in seinem Inneren einen Gasdurchtrittskanal mit einem vorbestimmten Querschnitt und Innendurchmesser auf. Ferner ist das Rohrelement mit zwei voneinander beabstandeten Öffnungen ausgestattet, an die ein Eingangskanal und ein Ausgangskanal eines Gas-Absperrhahns anschließbar sind. In einen Bereich zwischen den zwei Öffnungen ist der Gasdurchtrittskanal gasdicht verschlossen. Hierzu wird das Rohrelement zunächst in zwei Teile getrennt bzw. zerschnitten. Dann wird eine Scheibe, welche in der Regel einen etwas größeren Außendurchmesser als der Innendurchmesser des Rohrelementes besitzt, zwischen den zwei aufgetrennten Enden des geteilten Rohrelementes angeordnet und mit den beiden Enden gasdicht verschweißt.

Diese bekannten Gassammelleitungen besitzen jedoch den Nachteil, dass bei Ihrer Herstellung das Rohrelement und/oder die Scheibe während des Verschweißens beschädigt werden kann. Dies kann zu einer Undichtigkeit des Verschlusses und damit zu einem Gasleck führen. Bei der Produktion derartiger Gassammelleitungen tritt daher eine relativ hohe Ausschussquote auf, bzw. die Teile müssen ausgebessert werden. Dies erhöht den Aufwand und die Kosten für die Produktion. Durch das erforderliche Auftrennen und wieder Zusammenschweißen des Rohrelementes, verliert dieses an dieser Stelle ferner seine äußere Schutzschicht. Diese muss nach dem Abschluss des Schweißvorgangs wieder aufgetragen werden, was üblicher Weise durch Anbringen eines Anstrichs erfolgt. Hierfür ist jedoch ein separater Behandlungsvorgang erforderlich, was wiederum den Herstellungsaufwand und die Herstellungskosten erhöht. Infolge des erforderlichen Auftrennens und wieder Zusammenschweißens des Rohrelementes wird zudem dessen äußeres Erscheinungsbild beeinträchtigt. Und die Fertigungstoleranzen sind relativ hoch. Auch können durch den Schweißvorgang und das anschließende Anbringen des Anstrichs Verunreinigungen an den beiden Öffnungen auftreten oder sogar durch diese hindurch in den Gasdurchtrittskanal gelangen. Dies kann die Dichtungseigenschaften im Bereich der beiden Öffnungen beeinträchtigen. Und bei einem montierten Gas-Absperrhahn können hier Gasleckagen auftreten, was wiederum zu Ausschuss führt. Und schließlich können die Verunreinigungen auch bis zu einem an die Gassammelleitung und eine Verteilerleitung angeschlossenen Brenner gelangen und diesen verstopfen.

Um die vorher genannten Nachteile möglichst weitgehend zu vermeiden, ist eine Gassammelleitung entwickelt worden, wie sie aus der EP 1 944 545 A2 bekannt ist. Diese Gassammelleitung besitzt die Merkmale des Oberbegriffs des Anspruchs 1. Statt das Rohrelement aufzutrennen und später wieder unter Einfügung einer Zwischenscheibe zusammen zu schweißen, wird bei dieser vorbekannten Lösung ein einteiliges Rohrelement verwendet, bei dem ein stopfenartiges, gasdichtes Rohrverschlusselement in dem Bereich zwischen den zwei Öffnungen innerhalb des Rohrelementes angeordnet ist. Dieses Rohrverschlusselement soll den Gasdurchtrittskanal gasdicht verschließen. Das Rohrverschlusselement besitzt einen scheibenartigen Grundkörper mit einem elastischen Dichtungsring. Das Rohrverschlusselement wird in Gasdurchtrittskanal eingeführt und bis zu einer Position zwischen den beiden Öffnungen verschoben. Dort wird der Grundkörper mittels eines Werkzeugs etwas aufgeweitet, so dass sich der Dichtungsring gegen die Innenwand des Rohrelementes legt, welches seine ursprüngliche Form behält. Es hat sich gezeigt, dass ein derartiges Rohrverschlusselement nicht immer die an eine zuverlässige Gasdichtung gestellten Anforderungen erfüllt. Aus diesem Grund sind Modifikationen der zuvor genannten Gassammelleitung entwickelt worden, bei denen ein Teilbereich des Grundkörpers des Rohrverschlusselementes, der von dem elastischen Dichtungsring entfernt ist, mit dem Rohrelement verschweißt wird. Dies erfordert jedoch wieder einen zusätzlichen Arbeitsschritt und führt zu einigen der bereits weiter oben im Zusammenhang mit der geschweißten Ausführung beschriebenen Nachteilen. Ferner kann es aufgrund der beim Schweißen auftretenden hohen Temperaturen durch Wärmeleitung am Rohrelement und dem Grundkörper zu einer Schädigung des Dichtungsrings kommen.

Das Dokument US 2005/026101 A1 offenbart eine Versiegelung eines Endes eines Brennerrohrs, bei welchem ein kegelförmiges Stopfelement durch eine Öffnung an dem Ende des Brennerrohrs in das Brennerohr eingeführt wird, bis das Stopfelement an eine Stufe der Öffnung anstößt. Ein Durchmesser des Stopfelements ist größer als ein Durchmesser der Stufe. Durch Aufbringen eines Drucks auf das Stopfelement dehnt sich dieses derart radial nach außen, dass es abdichtend an der Stufe anliegt.

Das Dokument US 2008/0251064 A1 offenbart eine Gassammelleitung für ein Kochgerät mit einem parallel zur Gassammelleitung angeordneten Absperrventil, wobei in der Gassammelleitung ein Dichtungselement angeordnet ist, das einen Gasstrom durch die Gassammelleitung derart unterbricht, dass der gesamte Gasstrom durch das Absperrventil geleitet wird. Das Dichtungselement besteht aus einer kreisförmigen Scheibe und einer Ringdichtung.

Ferner offenbart das Dokument US 2002/000716 A1 einen Airbag-Gasgenerator zum Erzeugen von Gas zum Entfalten eines Airbags. Der Airbag-Gasgenerator umfasst mehrere Gaskammern, die durch eine Trennwand voneinander getrennt sind.

Der vorliegenden Erfindung daher liegt die Aufgabe bzw. das technische Problem zugrunde, eine gattungsgemäße Gassammelleitung zu schaffen, welche die den vorbekannten Gassammelleitungen anhaftenden technischen Nachteile vermeidet und einen zuverlässigen und dauerhaften gasdichten Verschluss des Gasdurchtrittskanals gewährleistet; ferner soll ein gasbetriebenes Gerät mit einer solchen Gassammelleitung zur Verfügung gestellt werden.

Diese Aufgabe wird gemäß einem ersten Aspekt gelöst durch eine erfindungsgemäße Gassammelleitung mit den Merkmalen des Anspruchs 1.

Bei der erfindungsgemäßen Gassammelleitung wird die Dichtungswirkung also durch ein Zusammenwirken des Rohrverschlusselementes mit dem plastisch verformten Rohrbereich erzielt.

Da bei der erfindungsgemäßen Lösung das Rohrelement nicht zerschnitten und anschließend wieder gasdicht zusammengeschweißt werden muss, kann auf sehr einfache, effektive, schnelle und kostengünstige Art und Weise eine zuverlässigere und sicherere Gassammelleitung hergestellt werden. Es tritt somit auch kein Schweiß-Verzug am Rohrelement auf, so dass präzisere Formen und Abmessungen der erfindungsgemäßen Gassammelleitung realisierbar sind. Zur Herstellung des gasdichten Verschlusses des Gasdurchtrittskanals der erfindungsgemäßen Gassammelleitung ist auch keine spanende Bearbeitung des Rohrelementes erforderlich. Es tritt somit weder Verschnitt noch Abfall auf. Es ist folglich eine verbesserte Materialausnutzung realisierbar. Und der Herstellungsprozess ist sauberer. Undichtigkeiten und Ausschuss durch Schweißfehler sind daher vermeidbar. Dadurch lassen sich Produktionskosten einsparen, die Produktionszeit reduzieren und die Gasdichtigkeit und folglich die Sicherheit und Zuverlässigkeit erhöhen.

Das stopfenartige, gasdichte Rohrverschlusselement lässt sich zudem einfach an einer gewünschten Position innerhalb des Rohrelementes anordnen, indem es in das Rohrelement eingeführt und innerhalb des Gasdurchtrittskanals bis zu der gewünschten Position verschoben wird. Dies kann mit Hilfe von z.B. stangenartigen oder kolbenstangenartigen Stützelementen erfolgen. Diese Stützelemente können auch dazu dienen, das Rohrverschlusselement während des plastischen Verformens des dem Rohrverschlusselement zugeordneten Rohrbereiches temporär festzuhalten. Anschließend können die Stützelemente wieder entfernt werden. Dies ermöglicht eine sehr präzise und effektive Arbeitsweise. Die dauerhafte Fixierung des Rohrverschlusselementes an der besagten Position und das vollständige Abdichten des Gasdurchtrittskanals erfolgt dann durch das plastische Verformen des Rohrelementes.

Durch den plastisch verformten Rohrbereich wird die Innenoberfläche des Rohrelementes nicht negativ beeinträchtigt. Es kann somit eine verbesserte und glattere Rohrinnenoberfläche erzielt werden, was zu verbesserten Gasabdichtungseigenschaften führt. Durch die erfindungsgemäße Lösung wird jedoch auch die Außenoberfläche des Rohrelementes nicht in Mitleidenschaft gezogen. Die äußere Schutzschicht (z.B. eine galvanisierte Schicht) des Rohrelementes und dessen äußeres Erscheinungsbild werden durch den plastisch verformten Rohrbereich nicht beeinträchtigt. Somit können ein verbessertes äußeres Erscheinungsbild, bessere Anti-Korrosionseigenschaften und eine höhere Präzision hinsichtlich der Außenabmessung und der Form der Gassammelleitung erzielt werden, was wiederum die Passgenauigkeit der erfindungsgemäßen Gassammelleitung im Falle des Einbaus in ein Gasgerät erhöht. Ein extra Nachbearbeitungs- oder Nachbehandlungsschritt zum erneuten Auftragen einer externen Antikorrosionsschicht, z.B. durch einen Anstrich, ist bei der erfindungsgemäßen Lösung nicht erforderlich.

Weil bei der erfindungsgemäße Gassammelleitung zur Herstellung des gasdichten Verschlusses weder eine spanende Bearbeitung noch ein Schweißen und ein Nachbehandeln des Rohrelementes erforderlich ist, besteht auch keine Gefahr, dass aus diesen Prozessen stammende Verunreinigungen auf das Rohrelement oder in den Gasdurchtrittskanal und in den Bereich des Verschlusses gelangen und eine Gasleckage oder Unregelmäßigkeiten an dem Rohrelement verursachen.

Die erfindungsgemäße Lösung ist besonders auch bei Gassammelleitungen anwendbar und von Vorteil, bei denen das Rohrelement aus einem geschweißten Rohr besteht, welches eine Längs-Schweißnaht aufweist. Eine solche Längs-Schweißnaht ist von der Außenseite des Rohrelementes kaum erkennbar, sie zeichnet sich an der Innenseite des Rohrelementes, d.h. in dessen Gasdurchtrittskanal, jedoch deutlich an der Rohrwandung ab bzw. steht geringfügig hervor und ist daher normalerweise nur sehr schwer gasdicht abzudichten. Aufgrund des erfindungsgemäß vorgesehenen, plastisch verformten Rohrbereichs, der der abdichtend an dem Rohrverschlusselement anliegt, kann jedoch auch bei diesem Rohrelement-Typ eine hervorragende, dauerhafte Gasdichtigkeit erzielt werden.

Obwohl in der erfindungsgemäßen Gassammelleitung ein stopfenartiges, gasdichtes Rohrverschlusselement verwendet wird, kann ein sicherer, dauerhaft gasdichter Verschluss des Gasdurchtrittskanals an einer nahezu beliebigen Position der Gassammelleitung gewährleistet werden. Durch die erfindungsgemäße Lösung lässt sich die Ausschussrate erheblich reduzieren.

Zusammenfassend kann eine Gassammelleitung hoher Qualität mit einem verbesserten, zuverlässigeren und dauerhaft gasdichten Verschluss des Gasdurchtrittskanals zur Verfügung gestellt werden.

Bevorzugte und vorteilhafte Ausgestaltungsmerkmale der erfindungsgemäßen Gassammelleitung sind Gegenstand der abhängigen Ansprüche 2 bis 11, die ihre Stütze in der nachfolgenden Beschreibung und den Zeichnungen finden.

Die der Erfindung zugrunde liegende Aufgabe wird gemäß einem zweiten Aspekt gelöst durch ein erfindungsgemäßes gasbetriebenes Gerät mit den Merkmalen des Anspruchs 12. Dieses gasbetriebene Gerät, insbesondere gasbetriebenes Haushaltsgerät oder gasbetriebene Erwärmungsvorrichtung, insbesondere ein Gasherd, ein Gasofen oder ein Gaskochfeld, ist mit einer Gassammelleitung nach einem der Ansprüche 1 bis 11 versehen. Mit dem erfindungsgemäßen Gerät sind im Wesentlichen die gleichen Vorteile erzielbar, die bereits weiter oben in Zusammenhang mit der erfindungsgemäßen Gassammelleitung beschrieben wurden.

Beispiele bevorzugter Ausführungsformen der erfindungsgemäßen Gassammelleitung und des erfindungsgemäßen gasbetriebenen Gerätes, mit weiteren Vorteilen und Details, sind nachfolgend unter Bezugnahme auf die beigefügten Zeichnungen beschrieben und näher erläutert.

Es zeigt:
- Fig. 1: eine schematische Längsschnittansicht eines wesentlichen Teilbereichs einer ersten Ausführungsform einer erfindungsgemäßen Gassammelleitung;
- Fig. 2: eine schematische Darstellung eines ersten Schrittes eines erfindungsgemäßen Verfahrens zur Herstellung der erfindungsgemäßen Gassammelleitung;
- Fig. 3: eine schematische Darstellung eines zweiten Schrittes des erfindungsgemäßen Verfahrens zur Herstellung der erfindungsgemäßen Gassammelleitung;
- Fig. 4: eine schematische Darstellung eines dritten Schrittes des erfindungsgemäßen Verfahrens zur Herstellung der erfindungsgemäßen Gassammelleitung;
- Fig. 5: eine schematische Darstellung eines vierten Schrittes des erfindungsgemäßen Verfahrens zur Herstellung der erfindungsgemäßen Gassammelleitung;
- Fig. 6: eine schematische Darstellung eines fünften Schrittes des erfindungsgemäßen Verfahrens zur Herstellung der erfindungsgemäßen Gassammelleitung;
- Fig. 7: eine schematische Darstellung eines sechsten Schrittes des erfindungsgemäßen Verfahrens zur Herstellung der erfindungsgemäßen Gassammelleitung;
- Fig. 8: eine schematische Längsschnittansicht einer zweiten Ausführungsform einer erfindungsgemäßen Gassammelleitung;
- Fig. 9: eine schematische, vergrößerte Querschnittsteilansicht einer Ausführungsform eines besonderen Dichtungselementes der erfindungsgemäßen Gassammelleitung;
- Fig. 10: eine schematische Querschnittsansicht einer Ausführungsform eines besonderen Grundkörpers eines Rohrverschlusselementes der erfindungsgemäßen Gassammelleitung; und
- Fig. 11: eine schematische Längsschnittansicht eines wesentlichen Teilbereichs einer dritten Ausführungsform einer erfindungsgemäßen Gassammelleitung.

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich oder sinnvoll ist.

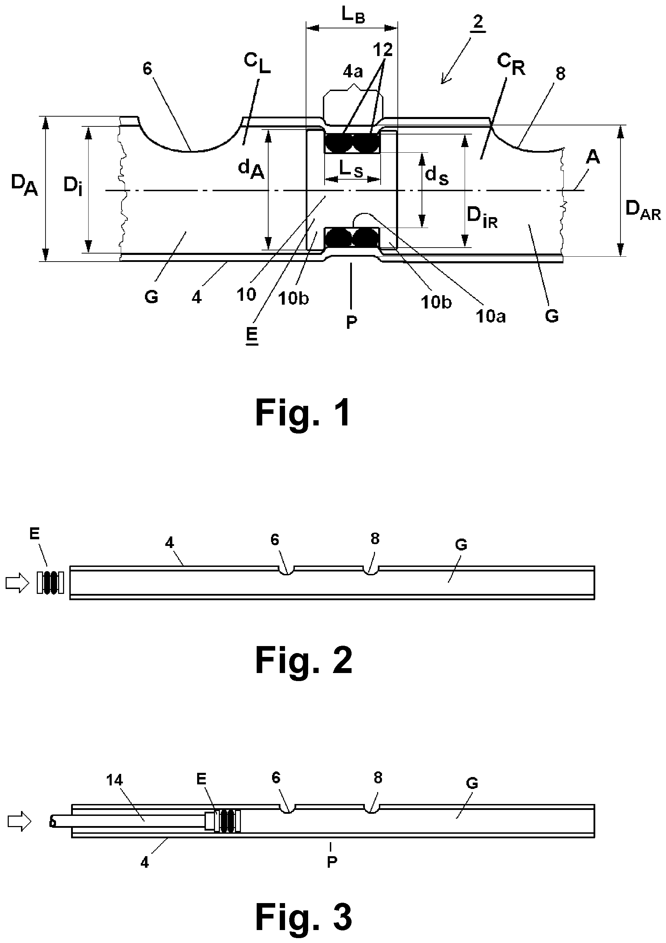

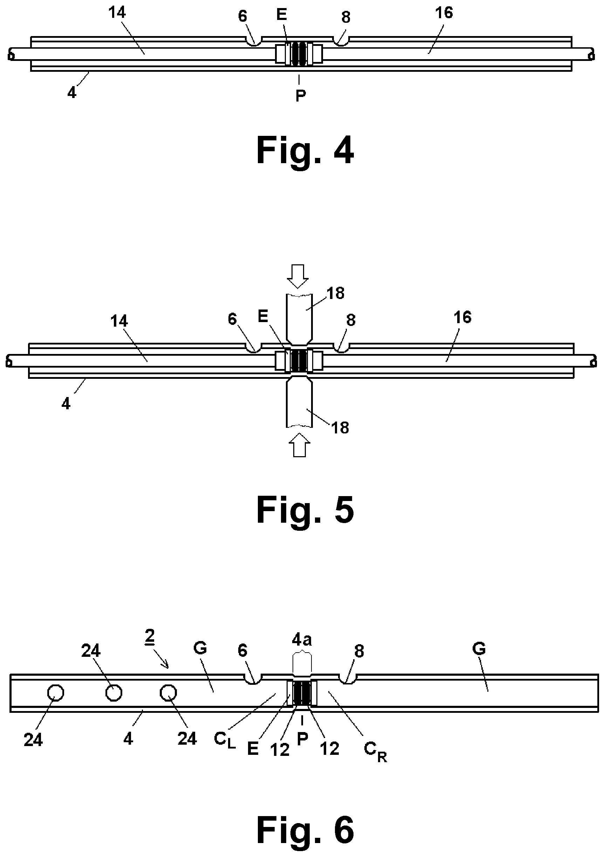

In der **Fig. 1** ist in einer schematischen Längsschnittansicht ein wesentlicher Teilbereich einer ersten Ausführungsform einer erfindungsgemäßen Gassammelleitung 2 in einem montierten Zustand dargestellt. Diese Gassammelleitung 2 ist für den Einbau in einen erfindungsgemäßen Gasherd (nicht gezeigt), der ein Gaskochfeld aufweist, vorgesehen. Die Gassammelleitung 2 besitzt ein Rohrelement 4, welches in seinem Inneren einen Gasdurchtrittskanal G mit einem vorbestimmten, kreisförmigen Querschnitt bzw. Durchtrittsquerschnitt und einem vorbestimmten Innendurchmesser Dᵢ aufweist. Der Außendurchmesser des Rohrelementes 4 ist durch das Bezugszeichen D_{A} und die mittlere Längsachse durch eine strichpunktierte Linie und das Bezugszeichen A angedeutet. Bei dem Rohrelement 4 handelt es sich um ein geschweißtes Rohr mit einer längslaufenden Schweißnaht (nicht gezeigt). Wie in der Zeichnung des Weiteren zu erkennen ist, verfügt das Rohrelement 4 über zwei in Richtung der Längsachse A voneinander beabstandete Bohrungen oder Öffnungen 6, 8, an die später ein Eingangskanal und ein Ausgangskanal eines Gas-Absperrhahns bzw. Haupthahns (nicht gezeigt) anschließbar sind. Das Rohrelement 4 kann weitere Öffnungen 24 (siehe Fig. 6) zum Anschließen von Gashähnen aufweisen, mit denen die Gaszufuhr zu einzelnen Brennern des Gasherds steuerbar sind.

In dem Bereich zwischen den beiden Öffnungen 6, 8 (d.h. in der Fig. 1 an der eingezeichneten Position P) ist ein stopfenartiges, gasdichtes Rohrverschlusselement E innerhalb des Rohrelementes 4 angeordnet, welches den Gasdurchtrittskanal G an dieser Stelle gasdicht verschließt. Das Rohrverschlusselement E besitzt einen zylindrischen Grundkörper 10 aus einer Metall-Legierung, z.B. aus einem Aluminium- oder Stahlwerkstoff. Der Außendurchmesser d_{A} des Grundkörpers 10 ist geringfügig kleiner als der Innendurchmesser Dᵢ des Rohrelementes 4, so dass der Grundkörper 10 zur Montage mit einer Spielpassung in das Rohrelement 4 einsetzbar und innerhalb des Gasdurchtrittskanals G bis zur Position P bewegbar und dort fixierbar ist. Die axiale Länge L_{B} des Grundkörpers 10 ist im vorliegenden Fall so bestimmt, dass der Grundkörpers 10 beim Einfügen in das Rohrelement 4 und beim Verschieben in demselben weder kippen noch verkanten kann. Im vorliegenden Fall beträgt die Länge L_{B} des Grundkörpers 10 etwas 75% des Außendurchmessers d_{A}. Die Erfindung ist jedoch nicht auf einen solchen Wert beschränkt. Sofern der Grundkörper 10 beim Einfügen in das Rohrelement 4 und beim Verschieben vorzugsweise beidseitig abgestützt wird (bzw. ein Kippen oder Verkanten auf andere Weise verhindert wird), kann die Länge L_{B} des Grundkörpers 10 auch viel geringer sein. D.h., der Grundkörper 10 kann in diesem Fall sogar als Scheibe ausgestaltet sein.

Wie in der Fig. 1 deutlich zu erkennen ist, weist der Grundkörper 10 einen im Wesentlichen H-förmigen Längsquerschnitt auf. Die beiden seitlichen Bereiche 10b des Grundkörpers (d.h. die seitlichen Schenkel des "H") sind in dreidimensionaler Betrachtung scheibenförmig und definieren an ihrem Außenumfang den Außendurchmesser d_{A} des Grundkörpers 10. Sie können gleiche oder unterschiedliche Breiten besitzen. Der dazwischen liegende Bereich hingegen, der einen geringeren Außendurchmesser ds besitzt, definiert einen Dichtungselement-Aufnahmebereich 10a der Länge L_{S}. Die Länge L_{S} ist so gewählt, dass im Aufnahmebereich 10a mindestens ein Dichtungselement 12 anbringbar ist. Im vorliegenden Ausführungsbeispiel sind die Länge L_{B} des Grundkörpers 10 und die Länge L_{S} seines Aufnahmebereichs 10a so ausgeführt, dass in dem Aufnahmebereich 10a ein Mehrfachdichtungselement anbringbar ist. Als Mehrfachdichtungselement dienen in diesem Fall zwei nebeneinander angeordnete, voneinander unabhängige, in der Art eines O-Rings ausgestaltete, reversibel elastisch verformbare Dichtungselemente 12, die aus einem gasresistenten Elastomerwerkstoff hergestellt sind. Im nicht eingebauten Zustand des Rohrverschlusselementes E sind die Außendurchmesser der Dichtungselemente 12 geringfügig größer als der Innendurchmesser Dᵢ des Rohrelementes 4. Je nach Ausführungsform des Rohrverschlusselementes E und der Art und Weise seiner Befestigung im Rohrelement 4 können die Außendurchmesser der Dichtungselemente 12 jedoch auch kleiner gleich dem Innendurchmesser Dᵢ sein.

Wie aus der Fig. 1 des Weiteren hervor geht, weist das Rohrelement 4 einen relativ zum Rohrverschlusselement E plastisch verformten Rohrbereich 4a auf, der abdichtend, d.h. gasdicht, an dem Rohrverschlusselement E und dessen Dichtungselementen 12 anliegt.

Genauer gesagt ist der plastisch verformte Rohrbereich 4a von der Außenseite des Rohrelementes 4 her in Richtung in dessen Gasdurchtrittskanal G und in den Dichtungselement-Aufnahmebereich 10a des Grundkörpers 10 hinein verformt. Es besteht an dieser Stelle somit eine lokale Kontraktion des Rohrelementes 4 in Richtung in den Gasdurchtrittskanal G hinein. Der ursprüngliche Innendurchmesser Dᵢ und der ursprüngliche Außendurchmesser D_{A} sind an dieser Stelle daher auf einen kleineren Innendurchmesser D_{iR} und einen kleineren Außendurchmesser D_{AR} reduziert. Und der plastisch verformte Rohrbereich 4a steht formschlüssig mit dem stopfenartigen, gasdichten Rohrverschlusselement E in Eingriff. D.h., bei Betrachtung im Längsschnitt gemäß Fig. 1 greift der plastisch verformte Rohrbereich 4a zwischen die beiden seitlichen Bereiche 10b (die seitlichen Schenkel des H-förmigen Längsquerschnitts). Dadurch ist das Rohrverschlusselement E in Längsrichtung des Rohrelementes 4 fixiert und formschlüssig gesichert.

Gleichzeitig drücken die Außenumfangsflächen der Dichtungselemente 12 fest gegen die Innenumfangsfläche des Rohrelementes 4. Ferner drücken die Innenumfangsflächen der Dichtungselemente 12 fest gegen die Außenumfangsfläche des Dichtungselement-Aufnahmebereichs 10a des Grundkörpers 10. Dadurch wird eine Doppeldichtung geschaffen, welche den Gasdurchtrittskanal G in dem Bereich zwischen den beiden Öffnungen 6, 8 vollständig gasdicht verschließt. Die Gassammelleitung 2 bzw. deren Rohrelement 4 ist somit durch das Rohrverschlusselement E in zwei gasdicht voneinander getrennte Bereiche C_{L} und C_{R} unterteilt, von denen der eine die Öffnung 6 und der andere die Öffnung 8 aufweist.

Die plastische Verformung des Rohrbereichs 4a bewirkt ferner, dass Teile des Außenumfangs der Bereiche 10b an die Innenumfangsfläche des Rohrelementes 4 gepresst werden. Dies erhöht zusätzlich die Dichtungswirkung.

Es wird nun ein Ausführungsbeispiel eines erfindungsgemäßen Verfahrens zur Herstellung der erfindungsgemäßen Gassammelleitung 2 von Fig. 1 beschrieben werden. Die Fig. 2 bis 7 veranschaulichen hierbei schematisch die jeweiligen Verfahrensschritte. Die herzustellende bzw. hergestellte Gassammelleitung 2 ist jeweils im Längsschnitt dargestellt.

In dem in **Fig. 2** schematisch dargestellten ersten Schritt werden zunächst ein gerades Rohr bzw. Rohrelement 4 und ein Rohrverschlusselement E bereit gestellt. Das Rohrelement 4 weist bereits die beiden Öffnungen 6 und 8 für den Gas-Absperrhahn auf. Ferner kann das Rohrelement 4 bereits mit weiteren Öffnungen 24 (siehe Fig. 6) versehen sein, an die später weitere Gashähne anschließbar sind. Aus Gründen der besseren Übersichtlichkeit sind diese zusätzlichen Öffnungen 24 in den Fig. 2 bis 5 nicht eingezeichnet. Dann wird das Rohrverschlusselement E in das eine freie Ende des Rohrelementes 4 eingefügt (in diesem Beispiel in das linke Ende), wie in der Fig. 2 durch einen Pfeil angedeutet ist.

In dem in **Fig. 3** schematisch dargestellten zweiten Schritt wird das eingefügte Rohrverschlusselement E dann zu der gewünschten Anbringungsposition P, die sich zwischen den beiden Öffnungen 6, 8 befindet, geschoben (siehe auch Fig. 4). Dies geschieht in diesem Beispiel mittels eines stangenartigen oder kolbenstangenartigen Stützelementes 14. Im vorliegenden Fall ist zum Verschieben ein einzelnes Stützelement 14 ausreichend, da, wie schon weiter oben erwähnt, die Konstruktion des Rohrverschlusselementes E kippsicher und verkantungssicher ist. Sollte das Rohrverschlusselement E von sich aus nicht kippsicher und verkantungssicher sein, empfiehlt es sich, das Verschieben mittels zwei Stützelementen vorzunehmen, wobei die Stützelemente das Rohrverschlusselement E von beiden Seiten abstützen und so gegen Kippen und Verkanten sichern.

In dem in **Fig. 4** schematisch dargestellten dritten Schritt befindet sich das Rohrverschlusselement E an der gewünschten Position P, in der es provisorisch festgehalten wird. Dies geschieht mit Hilfe von zwei Stützelementen 14 und 16, die das Rohrverschlusselement E von beiden Seiten halten. Das erste Stützelement ist das Stützelement 14, mit dem das Rohrverschlusselement E bereits an die Position P verschoben wurde. Das zweite Stützelement 16 wurde in das andere (rechte) freie Ende des Rohrelementes 4 eingeführt und bis zum Rohrverschlusselement E vorgeschoben.

In der **Fig. 5** ist schematisch ein vierter Schritt des Verfahrens dargestellt. Während das Rohrverschlusselement E auf die zuvor beschriebene Art und Weise provisorisch festgehalten wird, wird der Rohrbereich, welcher dem Dichtungselement-Aufnahmebereich 10a gegenüberliegt, von der Außenseite des Rohrelementes 4 her in Richtung in den Gasdurchtrittskanal G und in den Dichtungselement-Aufnahmebereich 10a des Grundkörpers 10 hinein plastisch verformt, bis die in Fig. 1 gezeigte Konfiguration erreicht ist. Das Verformen erfolgt in diesem Beispiel mit Hilfe einer hydraulischen Pressvorrichtung, welche z.B. zwei Klauen 18 oder Stempel aufweist, welche das Rohrelementes 4 im Wesentlichen vollständig an dessen Außenumfang umschließen. Die Bewegungsrichtung der Klauen 18 während dieses Press- und Verformungsvorgangs ist in der Fig. 5 durch zwei Pfeile angedeutet. Auf diese Weise wird der plastisch verformte Rohrbereich 4a (siehe Fig. 6) hergestellt und so das Rohrverschlusselement E an der Position P formschlüssig fixiert und der beschriebene gasdichte Verschluss innerhalb des Rohrelementes 4 hergestellt.

In dem in **Fig. 6** schematisch dargestellten fünften Schritt werden die Stützelemente 14 und 16 wieder entfernt. Und die Herstellung der Basiskonfiguration der erfindungsgemäßen Gassammelleitung 2 ist abgeschlossen. In die Fig. 6 sind auch die bereits erwähnten zusätzlichen Öffnungen 24, die zum Anschließen weiterer Gashähne dienen, eingezeichnet. Die Öffnungen 24 sind zwecks besserer Erkennbarkeit in die Bildebene gedreht dargestellt. Grundsätzlich liegen sie in diesem Ausführungsbeispiel jedoch wie die Öffnungen 6, 8 in einer in der Zeichnung um 90° nach oben gedrehten Position am Rohrelement 4. Die Öffnungen 24 können zusammen mit den Öffnungen 6 und 8 bereits vor dem oben beschriebenen ersten Schritt hergestellt werden. Es ist zu beachten, dass insbesondere an denjenigen Rändern der Öffnungen 6, 8, 24, die dem Inneren des Rohrelementes 4 zugewandt sind, scharfe Kanten vermieden werden sollten, da diese die Dichtungselemente 12 beschädigen könnten, wenn das Rohrverschlusselement E in das Rohrelement 4 eingeführt wird und entlang der Öffnungen (hier: 24 und 6) bis zur Position P verschoben wird.

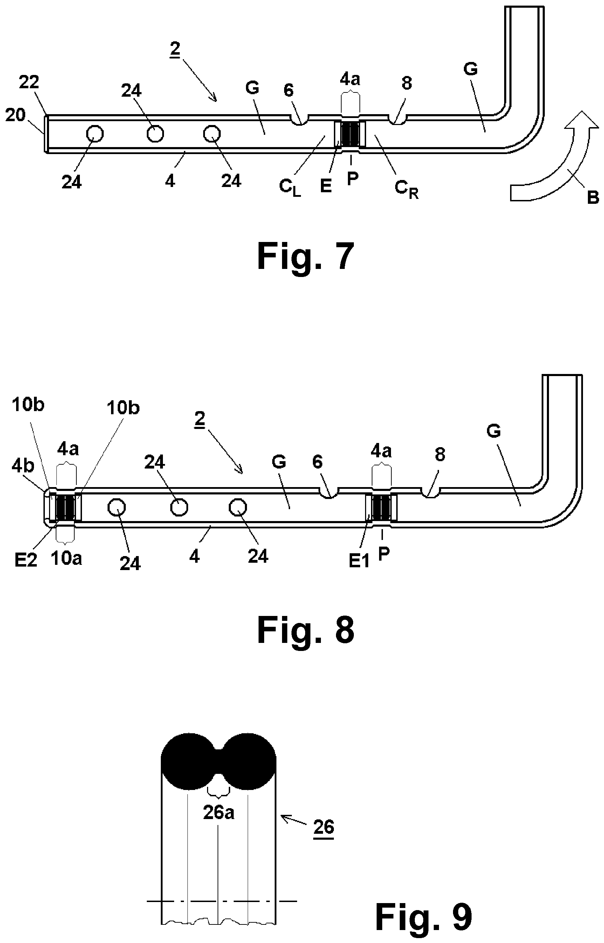

In dem in **Fig. 7** schematisch dargestellten sechsten Schritt wird in diesem Ausführungsbeispiel noch das rechte Ende des Rohrelementes 4 um 90° abgewinkelt bzw. gebogen, wie durch einen Pfeil B angedeutet ist. Die Gassammelleitung 2 erhält dadurch eine L-förmige Grundform. Beim Biegen sollte ein hinreichender Abstand zwischen dem Biegebereich und dem Rohrverschlusselement E eingehalten werden. Ferner wird in diesem Beispiel das linke offene Rohrende mittels einer mit dem Metallwerkstoff des Rohrelementes 4 verschweißbaren Metallscheibe 20 gasdicht verschweißt. Die Schweißnaht ist durch das Bezugszeichen 22 angedeutet. Da das linke offene Rohrende relativ weit von dem Rohrverschlusselement E entfernt ist, wird dieses (und werden insbesondere dessen Dichtungselemente 12) durch die beim Schweißen entstehende Hitze nicht beeinträchtigt. Grundsätzlich könnte das linke Rohrende auch bereits vor dem o.g. ersten Schritt gasdicht zugeschweißt werden. Dann müsste das Rohrverschlusselement E jedoch vom anderen Rohrende (hier: das rechte Ende) her in das Rohrelement 4 eingefügt werden.

In der **Fig. 8** ist eine schematische Längsschnittansicht einer zweiten, beispielhaften Ausführungsform einer erfindungsgemäßen Gassammelleitung 2 dargestellt. Diese Variante ähnelt derjenigen gemäß den Figuren 1 bis 7, wobei in der Fig. 8 das erste Rohrverschlusselement E1 dem Rohrverschlusselement E aus den Figuren 1 bis 7 entspricht. Bei der Gassammelleitung 2 nach Fig. 8 ist der gasdichte Verschluss des linken freien Endes des Rohrelementes 4 anders als bei der Variante gemäß den Fig. 1 bis 7 ausgeführt. Genauer gesagt, ist ein weiteres stopfenartiges, gasdichtes Rohrverschlusselement E2 innerhalb des Rohrelementes 4 in dessen offenen linken Ende angeordnet und verschließt dieses Ende gasdicht. Die Befestigung und Abdichtung des Rohrverschlusselement E2 entspricht weitgehend dem des Rohrverschlusselementes E1. Jedoch umgreift der formschlüssig mit dem Rohrverschlusselement E2 in Eingriff stehende, plastisch verformte linke Rohr-Endbereich 4b zusätzlich auch einen Teilbereich des Grundkörpers 10, welcher außerhalb des Dichtungselement-Aufnahmebereiches 10a liegt, d.h. hier den linken Bereich 10b.

In der **Fig. 9** ist in einer schematischen, vergrößerten Querschnittsteilansicht eine weitere Ausführungsform eines Dichtungselementes 26 des Rohrverschlusselementes E der erfindungsgemäßen Gassammelleitung dargestellt. Dieses Dichtungselement 26 ähnelt denen der Fig. 1 bis 8, ist im Gegensatz zu diesen zwei einzelnen O-Ring-artigen Dichtungselementen 12 jedoch bei Betrachtung im Querschnitt als ein integraler, einteiliger, Seite an Seite liegender Doppel-Torus mit einem mittleren Übergangsbereich 26a ausgestaltet. Dieses Dichtungselement 26 ist einfacher zu handhaben und schneller zu montieren als zwei einzelne Dichtungsringe 12.

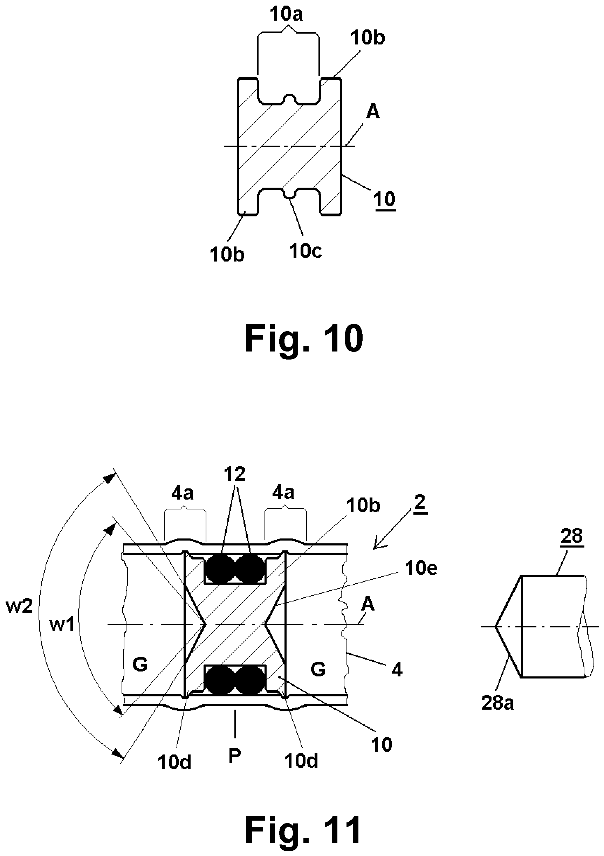

Das Dichtungselement 26 eignet sich besonders für einen Grundkörper 10, wie er in einem Längsschnitt in der **Fig. 10** dargestellt ist. Dieser Grundkörper 10 besitzt einen weiter unterteilten Dichtungselement-Aufnahmebereich 10a mit einem mittleren Steg 10c oder Vorsprung, der dem Übergangsbereich 26a des Dichtungselementes 26 zugeordnet ist. Der Steg 10c sichert das Dichtungselement 26 nicht nur in Längsrichtung (siehe Achse A) des Grundkörpers 10, sondern stellt eine zusätzliche Andrück- und Dichtungsfläche dar, was die Abdichtungseigenschaften des Grundkörpers 10 und seines Dichtungselementes 26 gegen Gas weiter erhöht.

In der **Fig. 11** ist in einer schematischen Längsschnittansicht ein wesentlicher Teilbereich einer dritten Ausführungsform einer erfindungsgemäßen Gassammelleitung 2 dargestellt. Diese Variante weist im fertig montierten Zustand des Rohrverschlusselementes E mehrere plastisch verformte Rohrbereiche 4a auf. Wie in der Zeichnung zu erkennen ist, sind diese plastisch verformten Rohrbereiche 4a zudem von der Innenseite des Rohrelementes 4 her nach außen verformt. An diesen Stellen ist der ursprüngliche Rohrquerschnitt also etwas aufgeweitet. Der Grundkörper 10 besitzt in den jeweiligen Bereichen 10b eine (oder auch mehrere) Schneidkanten 10d, welche sich im montierten Zustand des Rohrverschlusselementes E, wie dargestellt, in die Innenumfangsfläche des Rohrelementes 4 pressen und das Rohrverschlusselement E so formschlüssig von innen im Rohrelement 4 sichern. Ferner erhöhen die eingepressten Schneidkanten 10d die Gasdichtigkeit der Konstruktion.

Die Anbringung dieses Rohrverschlusselement E erfolgt auf die folgende Art und Weise:
Wie in der Zeichnung zu erkennen ist, besitzt der Grundkörper 10 auf seinen beiden Stirnseiten jeweils eine konusförmige Aussparung 10e. Diese besitzt in einem Ausgangszustand, in dem das Rohrverschlusselement E noch lose an der Position P angeordnet ist, einen Konuswinkel w1. Mit Hilfe von zwei Presswerkzeugen 28 (in der Fig. 11 ist nur eines schematisch dargestellt), die jeweils eine konusförmige Spitze 28a mit einem Konuswinkel besitzen, der größer als w1 ist, werden die stirnseitigen Bereiche des Grundkörpers 10 dann derart verformt und im Wesentlichen radial aufgeweitet oder aufgespreizt, dass sich die Schneidekanten 10d umlaufend in die Innenumfangsfläche des Rohrelementes 4 einpressen. An diesen Stellen wird das Rohrelement 4 auch leicht plastisch verformt, so dass sich die Bereiche 4a bilden. Das Aufweiten erfolgt, indem die zwei Presswerkzeuge 28, mit dem dazwischen angeordneten Grundkörper 10, in axialer Richtung (siehe Achse A) von links und rechts in die jeweilige konusförmige Aussparung 10e geführt und mit hohem Druck aufeinander zu bewegt werden, wobei sie Druck auf den dazwischen liegenden Grundkörper 10 ausüben. Hierbei werden die konusförmigen Aussparungen 10e ausgehend von dem Konuswinkel w1 auf einen Konuswinkel w2 aufgeweitet (w2 > w1) und so die besagte formschlüssige Verbindung und plastische Verformung hergestellt. Das Rohrelement 4 kann während dieses Prozesses mit einem Gegenhalter (nicht gezeigt) von außen abgestützt werden. Nach diesem Verformungsvorgang können die Presswerkzeuge 28 wieder entfernt werden.

Die Erfindung ist nicht auf die obigen Ausführungsbeispiele beschränkt. Im Rahmen des Schutzumfangs der Ansprüche können die erfindungsgemäße Gassammelleitung und das erfindungsgemäße gasbetriebene Gerät auch andere als die oben konkret beschriebenen Ausgestaltungsformen annehmen. Insbesondere können Merkmale der einzelnen Ausführungsformen auch miteinander kombiniert werden.

Das Rohrelement kann mehrere plastisch verformte Bereiche besitzen. Das Rohrelement muss auch nicht zwangsläufig einen kreisrunden Querschnitt und/oder einen konstanten Durchmesser aufweisen. Es sind auch asymmetrische, abgerundete Querschnittsformen sowie unterschiedliche Durchmesser pro Rohrelement möglich. Die Form bzw. Querschnittsform des Rohrverschlusselementes ist dann entsprechend anzupassen. Auch kann das Rohrverschlusselement andere geeignete Längsquerschnittsformen aufweisen die in einem gemeinsamen Aufnahmebereich oder aber in unterschiedlichen Aufnahmebereichen aufgenommen sind. Die erfindungsgemäße Gassammelleitung kann über zusätzliche Rohrverschlusselemente verfügen. Ein jeweiliges Rohrverschlusselement kann grundsätzliche eine oder mehrere Dichtungselemente aufweisen. Anstelle eines Dichtungselementes aus einem Elastomerwerkstoff können generell auch andere geeignete Dichtungselemente eingesetzt werden, welche eine zuverlässige Gasdichtigkeit sicherstellen. Obwohl der Grundkörper in den obigen Beispielen aus einem Metallwerkstoff hergestellt wurde, sind andere Werkstoffe möglich, solange die Gasdichtigkeit und mechanische Dauerfestigkeit des Grundkörpers sichergestellt ist. So können grundsätzlich auch bestimmte Kunststoffmaterialien oder Komposite Anwendung finden. Der Grundkörper kann einen oder mehrere Anschläge aufweisen, welche das plastische Verformen des Rohrelementes exakt begrenzen. Grundkörper und Dichtungselement können zudem eine integrale Einheit bilden.

Falls zur Anbringung des Rohrverschlusselementes an seiner gewünschten Position nur ein einzelnes Stützelement verwendet wird oder verwendet werden kann, so kann dieses im Sinne der Erfindung eine Hafteinrichtung, z.B. mindestens einen Saugnapf oder Magnet oder dergleichen, aufweisen, welche das Rohrverschlusselement während des Verschiebens im Rohrelement und/oder während des plastischen Verformens hält und stützt.

Bei dem erfindungsgemäßen gasbetriebenen Gerät kann es sich insbesondere um ein gasbetriebenes Haushaltsgerät oder eine gasbetriebene Erwärmungsvorrichtung, insbesondere ein Gasherd, ein Gasofen oder ein Gaskochfeld handeln.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 2: Gassammelleitung
- 4: Rohr / Rohrelement
- 4a: Plastisch verformter Rohrbereich
- 4b: Plastisch verformter Rohr-Endbereich
- 6: Öffnung
- 8: Öffnung
- 10: Grundkörper von E
- 10a: Dichtungselement-Aufnahmebereich
- 10b: Seitliche Bereiche von 10
- 10c: Steg
- 10d: Schneidkanten
- 10e: Konusförmige Aussparungen
- 12: Dichtungselemente
- 14: Erstes stangenartiges Stützelement
- 16: Zweites stangenartiges Stützelement
- 18: Klauen einer hydraulischen Pressvorrichtung
- 20: Metallscheibe
- 22: Schweißnaht
- 24: Zusätzliche Öffnungen
- 26: Dichtungselement
- 26a: Übergangsbereich
- 28: Presswerkzeug
- 28a: Konusförmige Spitze

- A: Längsachse
- B: Biegerichtung
- C_{L}: Bereich von 4
- C_{R}: Bereich von 4
- d_{A}: Außendurchmesser von 10
- d_{S}: Außendurchmesser von 10a
- D_{A}: Außendurchmesser von 4
- D_{AR}: Reduzierter Außendurchmesser
- Dᵢ: Innendurchmesser von 4
- D_{iR}: Reduzierter Innendurchmesser
- E: Rohrverschlusselement
- L_{B}: Länge von 10
- L_{S}: Länge von 10a
- P: Anbringungsposition von E
- w1: Kleinerer Konuswinkel
- w2: Größerer Konuswinkel

## Patentansprüche

1. Gassammelleitung (2) für ein gasbetriebenes Haushaltsgerät, mit
- einem Rohrelement (4), welches in seinem Inneren einen Gasdurchtrittskanal (G) mit einem vorbestimmten Querschnitt aufweist, und
- einem stopfenartigen, gasdichten Rohrverschlusselement (E), welches innerhalb des Rohrelementes (4) angeordnet ist und den Gasdurchtrittskanal (G) in diesem Bereich gasdicht verschließt,
das Rohrelement (4) mindestens einen relativ zum Rohrverschlusselement (E) plastisch verformten Rohrbereich (4a) aufweist, der abdichtend an dem Rohrverschlusselement (E) anliegt, **dadurch gekennzeichnet, dass**
der plastisch verformte Rohrbereich (4a) von der Außenseite des Rohrelementes (4) her in Richtung in den Gasdurchtrittskanal (G) hinein verformt ist.

2. Gassammelleitung (2) nach Anspruch 1,
**dadurch gekennzeichnet, dass**
das Rohrelement (4) über zwei voneinander beabstandete Öffnungen (6, 8) verfügt, an die ein Eingangskanal und ein Ausgangskanal eines Gas-Absperrhahns anschließbar sind; und
das stopfenartige, gasdichte Rohrverschlusselement (E) innerhalb des Rohrelementes (4) in einen Bereich zwischen den zwei Öffnungen (6, 8) angeordnet ist und den Gasdurchtrittskanal (G) in diesem Bereich gasdicht verschließt.

3. Gassammelleitung (2) nach Anspruch 1 oder 2,
**dadurch gekennzeichnet, dass**
das Rohrelement (4) über ein offenes Ende verfügt; und das stopfenartige, gasdichte Rohrverschlusselement (E) innerhalb des Rohrelementes (4) in dem offenen Ende angeordnet ist und dieses gasdicht verschließt.

4. Gassammelleitung (2) nach einem oder mehreren der vorher genannten Ansprüche,
**dadurch gekennzeichnet, dass**
der plastisch verformte Rohrbereich (4a) durch eine lokale Kontraktion des Rohrelementes (4) in Richtung in den Gasdurchtrittskanal (G) hinein verformt ist.

5. Gassammelleitung (2) nach einem oder mehreren der vorher genannten Ansprüche,
**dadurch gekennzeichnet, dass**
der plastisch verformte Rohrbereich (4a) von der Innenseite des Rohrelementes (4) her nach außen verformt ist.

6. Gassammelleitung (2) nach einem oder mehreren der vorher genannten Ansprüche,
**dadurch gekennzeichnet, dass**
das Rohrverschlusselement (E) einen Grundkörper (10) aufweist, welcher über einen Dichtungselement-Aufnahmebereich (10a) verfügt, in dem mindestens ein Dichtungselement (12; 26), insbesondere ein Mehrfachdichtungselement, anbringbar ist.

7. Gassammelleitung (2) nach einem oder mehreren der vorher genannten Ansprüche,
**dadurch gekennzeichnet, dass**
der Grundkörper (10) einen im Wesentlichen H-förmigen Längsquerschnitt aufweist.

8. Gassammelleitung (2) nach einem oder mehreren der vorher genannten Ansprüche,
**dadurch gekennzeichnet, dass**
das mindestens eine Dichtungselement (112; 26) ein reversibel elastisch verformbares Dichtungselement ist, insbesondere ein aus einem Elastomerwerkstoff hergestelltes Dichtungselement, insbesondere ein ringartiges, torusartiges Dichtungselement oder ein Dichtungselement in der Art eines Seite an Seite liegenden Doppel-Torus.

9. Gassammelleitung (2) nach einem oder mehreren der vorher genannten Ansprüche,
**dadurch gekennzeichnet, dass**
der plastisch verformte Rohrbereich (4a) formschlüssig mit dem stopfenartigen, gasdichten Rohrverschlusselement (E) in Eingriff steht.

10. Gassammelleitung (2) nach einem oder mehreren der vorher genannten Ansprüche,
**dadurch gekennzeichnet, dass**
der formschlüssig mit dem stopfenartigen, gasdichten Rohrverschlusselement (E) in Eingriff stehende, plastisch verformte Rohrbereich (4a) in den Dichtungselement-Aufnahmebereich (10a) des Grundkörpers (10) des Rohrverschlusselementes (E) hinein verformt ist.

11. Gassammelleitung (2) nach einem oder mehreren der vorher genannten Ansprüche,
**dadurch gekennzeichnet, dass**
der formschlüssig mit dem stopfenartigen, gasdichten Rohrverschlusselement (E) in Eingriff stehende, plastisch verformte Rohrbereich (4a) mindestens ein Teilbereich (10b) des Grundkörpers (10), welcher außerhalb des Dichtungselement-Aufnahmebereiches (10a) liegt, umgreift (4b).

12. Gasbetriebenes Gerät, insbesondere gasbetriebenes Haushaltsgerät oder gasbetriebene Erwärmungsvorrichtung, insbesondere ein Gasherd, ein Gasofen oder ein Gaskochfeld, mit einer Gassammelleitung (2) nach einem der Ansprüche 1 bis 11.

## Claims

1. Gas collecting pipe (2) for a gas-operated household device, having
- a tube element (4) which in its interior has a gas passage channel (G) with a predetermined cross-section, and
- a stopper-like, gas-tight tube closure element (E) which is arranged inside the tube element (4) and closes the gas passage channel (G) in this region in a gas-tight manner,
the tube element (4) has at least one tube region (4a) which is plastically deformed relative to the tube closure element (E) and which abuts the tube closure element (E) in a sealing manner,
**characterised in that**
the plastically deformed tube region (4a) is deformed from the outside of the tube element (4) into the gas passage channel (G).

2. Gas collecting pipe (2) according to claim 1,
**characterised in that**
the tube element (4) has two openings (6, 8) spaced apart from one another, to which an input channel and an output channel of a gas shut-off valve can be connected; and
the stopper-like, gas-tight tube closure element (E) is arranged inside the tube element (4) in a region between the two openings (6, 8) and closes the gas passage channel (G) in this region in a gas-tight manner.

3. Gas collecting pipe (2) according to claim 1 or 2,
**characterised in that**
the tube element (4) has an open end; and the stopper-like, gas-tight tube closure element (E) is arranged inside the tube element (4) in the open end and closes it in a gas-tight manner.

4. Gas collecting pipe (2) according to one or more of the preceding claims,
**characterised in that**
the plastically deformed tube region (4a) is deformed by a local contraction of the tube element (4) into the gas passage channel (G).

5. Gas collecting pipe (2) according to one or more of the preceding claims,
**characterised in that**
the plastically deformed tube region (4a) is deformed from the inside of the tube element (4) towards the outside.

6. Gas collecting pipe (2) according to one or more of the preceding claims,
**characterised in that**
the tube closure element (E) has a base body (10) which has a sealing element receiving region (10a), in which at least one sealing element (12; 26), in particular a multiple sealing element, can be mounted.

7. Gas collecting pipe (2) according to one or more of the preceding claims,
**characterised in that**
the base body (10) has a substantially H-shaped longitudinal cross-section.

8. Gas collecting pipe (2) according to one or more of the preceding claims,
**characterised in that**
the at least one sealing element (112; 26) is a reversibly elastically deformable sealing element, in particular a sealing element made of an elastomer material, in particular a ring-like, toroidal sealing element or a sealing element in the manner of a side-by-side double torus.

9. Gas collecting pipe (2) according to one or more of the preceding claims,
**characterised in that**
the plastically deformed tube region (4a) engages in a form-fit manner with the stopper-like, gas-tight tube closure element (E).

10. Gas collecting pipe (2) according to one or more of the preceding claims,
**characterised in that**
the plastically deformed tube region (4a) which engages with the stopper-like, gas-tight tube closure element (E) in a form-fit manner is deformed into the sealing element receiving region (10a) of the base body (10) of the tube closure element (E).

11. Gas collecting pipe (2) according to one or more of the preceding claims,
**characterised in that**
the plastically deformed tube region (4a) which engages with the stopper-like, gas-tight tube closure element (E) in a form-fit manner engages around (4b) at least one partial region (10b) of the base body (10) which lies outside the sealing element receiving region (10a).

12. Gas-operated device, in particular gas-operated household device or gas-operated heating device, in particular a gas stove, a gas oven or a gas hob, having a gas collecting pipe (2) according to one of claims 1 to 11.

## Revendications

1. Conduite de collecte de gaz (2) pour un appareil ménager fonctionnant au gaz, avec
- un élément tubulaire (4), lequel présente en son sein un canal de passage de gaz (G) avec une section préalablement déterminée, et
- un élément d'obturation de tuyau (E) analogue à un bouchon et étanche au gaz, disposé à l'intérieur de l'élément tubulaire (4) et qui obture le canal de passage de gaz (G) de façon étanche au gaz dans cette zone, dans lequel l'élément tubulaire (4) présente au moins une zone de tuyau (4a) déformée plastiquement par rapport à l'élément d'obturation de tuyau (E), laquelle est contiguë de manière étanche à l'élément d'obturation de tuyau (E), **caractérisée en ce que** la zone de tuyau (4a) déformée plastiquement est déformée du côté extérieur de l'élément tubulaire (4) en direction du canal de passage de gaz (G).

2. Conduite de collecte de gaz (2) selon la revendication 1, **caractérisée en ce que** l'élément tubulaire (4) possède deux orifices (6, 8) distants l'un de l'autre, auxquels un canal d'entrée et un canal de sortie d'un robinet d'arrêt de gaz peuvent être raccordés ; et l'élément d'obturation de tuyau (E) analogue à un bouchon et étanche au gaz est disposé à l'intérieur de l'élément tubulaire (4) dans une zone entre les deux orifices (6, 8) et obture le canal de passage de gaz (G) de façon étanche au gaz dans cette zone.

3. Conduite de collecte de gaz (2) selon la revendication 1 ou 2, **caractérisée en ce que** l'élément tubulaire (4) possède une extrémité ouverte ; et l'élément d'obturation de tuyau (E) analogue à un bouchon et étanche au gaz est disposé à l'intérieur de l'élément tubulaire (4) dans l'extrémité ouverte et l'obture de façon étanche au gaz.

4. Conduite de collecte de gaz (2) selon une ou plusieurs des revendications précédentes, **caractérisée en ce que** la zone de tuyau (4a) déformée plastiquement est déformée via une contraction locale de l'élément tubulaire (4) vers l'intérieur du canal de passage de gaz (G).

5. Conduite de collecte de gaz (2) selon une ou plusieurs des revendications précédentes, **caractérisée en ce que** la zone de tuyau (4a) déformée plastiquement est déformée du côté intérieur de l'élément tubulaire (4) vers l'extérieur.

6. Conduite de collecte de gaz (2) selon une ou plusieurs des revendications précédentes, **caractérisée en ce que** l'élément d'obturation de tuyau (E) présente un corps de base (10) disposant d'une zone d'accueil d'un élément d'étanchéité (10a), dans laquelle au moins un élément d'étanchéité (12 ; 26), en particulier un élément d'étanchéité multiple peut être apposé.

7. Conduite de collecte de gaz (2) selon une ou plusieurs des revendications précédentes, **caractérisée en ce que** le corps de base (10) présente une section longitudinale essentiellement en forme de H.

8. Conduite de collecte de gaz (2) selon une ou plusieurs des revendications précédentes, **caractérisée en ce que** l'au moins un élément d'étanchéité (112 ; 26) est un élément d'étanchéité déformable élastiquement de manière réversible, en particulier un élément d'étanchéité fabriqué en un matériau élastomère, en particulier un élément d'étanchéité annulaire, analogue à un tore ou un élément d'étanchéité à la manière d'un double tore côte-à-côte.

9. Conduite de collecte de gaz (2) selon une ou plusieurs des revendications précédentes, **caractérisée en ce que** la zone de tuyau (4a) déformée plastiquement s'engrène par complémentarité de formes avec l'élément d'obturation de tuyau (E) analogue à un bouchon et étanche au gaz.

10. Conduite de collecte de gaz (2) selon une ou plusieurs des revendications précédentes, **caractérisée en ce que** la zone de tuyau (4a) déformée plastiquement s'engrenant par complémentarité de formes avec l'élément d'obturation de tuyau (E) analogue à un bouchon et étanche au gaz est déformée à l'intérieur de la zone d'accueil d'un élément d'étanchéité (10a) du corps de base (10) de l'élément d'obturation de tuyau (E).

11. Conduite de collecte de gaz (2) selon une ou plusieurs des revendications précédentes, **caractérisée en ce que** la zone de tuyau (4a) déformée plastiquement s'engrenant par complémentarité de formes avec l'élément d'obturation de tuyau (E) analogue à un bouchon et étanche au gaz entoure au moins une zone partielle (10b) du corps de base (10) se trouvant en dehors de la zone d'accueil d'un élément d'étanchéité (10a).

12. Appareil fonctionnant au gaz, en particulier appareil ménager fonctionnant au gaz ou dispositif chauffant fonctionnant au gaz, en particulier cuisinière à gaz, four à gaz ou champ de cuisson à gaz, avec une conduite de collecte de gaz (2) selon l'une des revendications 1 à 11.
